# EUROPÄISCHE PATENTSCHRIFT

(11) **EP 0 629 543 B1**
(45) Veröffentlichungstag und Bekanntmachung des Hinweises auf die Patenterteilung: **28.08.1996**
(21) Anmeldenummer: 94108780.1
(22) Anmeldetag: 08.06.1994
(51) Int. Cl.: B62D 27/06, B60P 7/04, B60J 7/10

(54) **Tragpfostenkupplung für Verdeckgestelle von Lastkraftwagen und Anhängern**
Support post coupling device for roofframes of trucks and trailers
Dispositif d'accouplement pour pied porteur pour cadres de toit de camions ou remorques

(30) Priorität: 18.06.1993 DE 4320292
(43) Veröffentlichungstag der Anmeldung: 21.12.1994
(73) Patentinhaber: ED. SCHARWÄCHTER GmbH & Co. FAHRZEUGTECHNIK, D-94491 Hengersberg (DE)
(72) Erfinder: Bremicker, Eduard, 42855 Remscheid (DE)
(74) Vertreter: Schön, Theodor, Patent- und Zivilingenieur

(56) Entgegenhaltungen:
- DE-A- 2 718 674
- DE-U- 8 525 995
- GB-A- 1 542 812

## Beschreibung

Die Erfindung bezieht sich auf eine Tragpfostenkupplung für aus über aufragende Tragpfosten gegen die Ladeplattform abgestützten Längs-und Quergurten gebildete Verdeckgestelle von Lastkraftwagen und Anhängern, bei welchen die Tragpfosten jeweils aus einem oberendig und unterendig mit je einer Einrichtung einerseits zur Verbindung mit den oberen Längsgurten des Verdeckgestelles und andererseits mit den Längsholmen einer Ladeplattform versehenen Profilabschnitt bestehen. Eine derartige kupplung ist z.B. aus DE-A-2 718 674 bekannt.

Zum Tragen einer den Laderaum überdeckenden Plane bestimmte Verdeckgestelle von Lastkraftwagen und Anhängern bestehen üblicherweise aus oberen Längsgurten und gegebenenfalls an den Stirnseiten des Verdeckgestelles angeordneten Quergurtten und einer Anzahl aufragender Tragpfosten, welche die Längs-und Quergurten des Verdeckgestelles gegen die Ladeplattform des Lastkraftwagens oder Anhängers abstützen. Dabei umfaßt das Verdeckgestell wenigstemns vir an den Ecken der Ladeplattform angeordnete Tragpfosten und sind je nach der Länge der zu überdeckenden Ladeplattform gegebenenfalls auch über die Seitenlängen des Verdeckgestelles hin verteilt zusätzliche Tragpfosten angeordnet. Beim Beladen oder Entladen des Fahrzeuges, insbesondere mittels Stapler sind die Tragpfosten jedoch häufig behindernd, so daß sie während des Be-oder Entladevorganges vorübergehend abgenommen werden müssen.
Zu diesem Zwecke sind bereits verschiedene Ausgestaltungsformen lösbarer Verbindungen zwischen Tragpfosten und Längsgurten des Verdeckgestelles bekannt geworden, die zwar ein Abnehmen und Wiedereinsetzen der Tragpfosten ermöglichen, sich aber jeweils entweder durch eine besondere konstruktive Aufwendigkeit oder aber durch eine schwierige bzw. umständliche Handhabung auszeichnen. So ist bei einer bekannten Bauart einer lösbaren Verbindung zwischen dem Längsgurt des Verdeckgestelles und dem Tragpfosten vorgesehen, daß der Tragpfosten nur durch überwinden einer Federkraft horizontal und vertikal vom Längsgurt des Verdeckgestelles abnehmbar ist. Angesichts des Gewichtes des Tragpfostens und ferner angesichts des Umstandes, daß die oberen Längsgurten des Verdeckgestelles in einer beträchtlichen Höhe oberhalb der Ladeplattform angeordnet und somit von der Ladeplattform aus nicht oder wenigstens nur sehr schwer zugänglich sind gestaltet sich das Abnehmen und Wiedereinsetzen der Tragpfosten bei dieser bekannten Bauart einer Tragpfosten-/Längsgurtverbindung zumindest schwierig und hinsichtlich der Bedienungsdperson kraftaufwendig.

Der Erfindung liegt die Aufgabe zugrunde eine Tragpfostenkupplung für Verdeckgestelle von Lastkraftwagen und Anhängern zu schaffen, mittels welcher Tragpfosten bei absoluter Sicherheit der Verbindung zwischen Längs-bzw. gegebenenfalls Quergurt des Verdeckgestelles und montiertem Tragpfosten in einfachster Weise sowohl an dessen Ecken als auch, gegebenenfalls an wählbarer Stelle, innerhalb dessen Längs-und Querseiten in den Verband des Verdeckgestelles einsetzbar sind.

Diese Aufgabe wird bei einer Tragpfostenkupplung für ein Verdeckgestell der eingangs umrissenen Bauart erfindungsgemäß durch die Merkmale des kennzeichnenden Teils von Anspruch 1 gelöst. Die Einrichtung zur Verbindung des Tragpfostens mit dem oberen Längsgurt des Verdeckgestelles besteht aus einer Steck- Schwenkriegeleinrichtung. Die Gestaltung der Verbindung des Tragpfostens mit dem oberen Längsgurt des Verdeckgestelles als Steck-Schwenkriegeleinrichtung gewährleistet eine sowohl in horizontaler als auch in vertikaler Richtung eine rein formschlüssige Verbindung des Tragpfostens mit dem Längsgurt und damit selbst im Fahrbetrieb eine absolute Sicherheit der Verbindung gegen ein unbeabsichtigtes selbsttätiges Lösen. Darüberhinaus zeichnet sich eine als Steck-Schwenkriegeleinrichtung gestaltete Verbindung zwischen Tragpfosten und Längsgurt in besonderer Weise durch eine einfache Handhabung aus, dahingehend, daß für das Einsetzen und Ausheben des Tragpfostens aus dem Verband des Verdeckgestelles keinerlei Federkräfte oder dergl. überwunden werden müssen.

Bei einer bevorzugten Verwirklichungsform ist vorgesehen, daß die Steck-Schwenkriegeleinrichtung zur oberendigen Verbindung des Tragpfostens mit dem Längsgurt des Verdeckgestelles aus einem pfostenseitig angeordneten Auge und einem verdeckseitig angeordneten Zapfen sowie einer eine Rastausnehmung aufweisenden Riegelplatte und eine Riegelnase umfassenden Verriegelungseinrichtung besteht, wobei die aus Zapfen und Auge bestehende Steckverbindung bevorzugterweise parallel zum Längsgurt des Verdeckgestelles ausgerichtet angeordnet ist, um auch bei sehr schmaler Ausbildung der oberen Längsgurte des Verdeckgestelles und hinreichender gegenseitiger Eingriffslänge von Zapfen und Auge noch innerhalb der Längsgurtbreite unterbringbar zu sein.

Im Zusammenhang mit dieser bevorzugten Verwirklichungsform ist ferner vorgesehen, daß die Schwenkriegeleinrichtung aus einer tangential zum Außenumfang des am Tragpfosten angeordneten Auges ausgerichten Riegelnase und einer als Langlochausnehmung ausgebildeten Rastausnehmung in einer an den oberen Längsgurt des Verdeckgestelles anschließbaren Riegelplatte besteht, wobei der Zapfen der Steckverbindung gegenüber dem lichten Durchmeser des am Tragpfosten angeordneten Auges einen geringeren Querschnitt aufweist und wobei ferner die Riegelnase mit zu ihrer Spitze hin konvergierenden Längs und Seitenflanken ausgestattet ist. Eine solche Ausgestaltung einerseits der Steck- und andererseits der Schwenkriegeleinrichtung gewährleistet zum einen ein leichtes und müheloses Einführen des längsgurtseitigen Zapfens in das am oberen Tragpfostenende angeordnete Auge und zum anderen ein sowohl ein einfaches und selbsttätiges Verspannen der Verbindung zwischen Längsgurt und Tragpfosten als auch ein selbsttätiges einrücken und Verspannen der Schwenkriegeleinrichtung beim Ausrichten des Tragpfostens in seine bestimmungsgemäß vertikale Stellung.

In einer einfachen und zweckmäßigen Einzelausgestaltung der Schwenkriegeleinrichtung ist weiterhin vorgesehen, daß die die Rastausnehmung bildende Langlochausnehmung in der Riegelplatte mit geradlinig senkrecht verlaufenden Umfangswandungen ausgestattet und in Verbindung mit einer zum Auge tangentialen Anordnung der Nase bezüglich der Längsachse des Tragpfostens asymetrisch angeordnet ist und daß zugleich auch die Längserstreckung der Langlochausnehmung der mittleren Länge der Riegelnase entspricht.

In weiterer Einzelausgestaltung kann die Riegelplatte zugleich auch noch als Träger sonstiger Einrichtungen des Verdeckgestelles ausgebildet und verwendet werden, insbesondere kann im Rahmen einer solchen Ausgestaltung daher vorgesehen sein, daß die Riegelplatte quer zur Längserstreckung des Längsgurtes des Verdeckes ausgerichtet angeordnet und an einem die Längsgurtbreite überragenden Längenabschnitt mit einer Aufnahme für eine abnehmbare Queraussteifung des Verbandes des Verdeckgestelles ausgestattet ist.

Um eine, wenigstens innerhalb gewisser Grenzen, wählbare Lage der Tragpfosten innerhalb einer Längs-oder Querseite des Verdeckgestelles zu ermöglichen ist nach einem weiteren Merkmal der Erfindung vorgesehen, daß die Riegelplatte und der Zapfenträger an einem Kupplungsteil zum Anschluß an den oberen Längsgurt des Verdeckgestelles angeordnet sind, wobei zweckmäßigerweise weiterhin vorgesehen sein kann, daß die Riegelplatte durch einen Flachmaterialzuschnitt gebildet und mittels Schweißung mit dem Tragteil des Kupplungsteiles verbunden ist und daß ferner an das Tragteil zugleich eine Aufnahme für eine Aussteifungsstrebe des Verdeckgestelles angeschlossen ist.

Zweckmäßigerweise ist die Raumform des Kupplungsteiles fernerhin so gewählt, daß es aus einen im wesentlichen U-förmigen, den Längsgurt des Verdeckgestelles teilweise umfassenden Tragteil und wenigstens einer Verriegelungseinrichtung zur Festlegung an dem Längs- oder Quergurt des Verdeckgestelles besteht, wobei das Kupplungsteil zur Verbindung mit dem bzw. zur Festlegung z.B. am Längsgurt des Verdeckgestelles mit zwei zur Riegelplatte symetrisch angeordneten Verriegelungseinrichtungen zur Verbindung mit einem Gurt des Verdeckgestelles aufweist und daß die beiden Verriegelungseinrichtungen jeweils durch einen quer zur Längserstreckung des Verdeckgurtes ausgerichtet angeordneten Federschnäpper und zugehörige Ausnehmungen im Verdeckgurt gebildet sind.

Die Erfindung ist in der nachfolgenden Beispielsbeschreibung anhand eines in der Zeichnung dargestellten Ausführungsbeispieles im Einzelnen beschrieben.
In der Zeichnung zeigt die
- Figur 1: eine schematische schaubildliche Darstellung eines Verdeckgestelles für einen Lastkraftwagen;
- Figur 2: eine abschinttsweise Seitenansicht eines Tragpfostens samt Steck-Schwenkriegel;
- Figur 3: eine abschnittsweise Stirnansicht eines Tragpfostens gemäß Figur 2;
- Figur 4: eine Draufsicht auf die Riegelplatte der Steck-Schwenkriegels nach Figur 2 oder 3.
- Figur 5: eine Stirnansicht des am Tragpfosten angeordneten Auges.

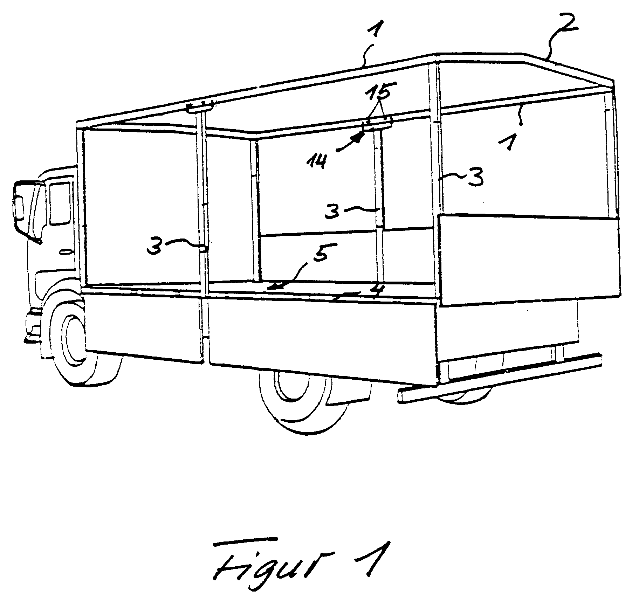

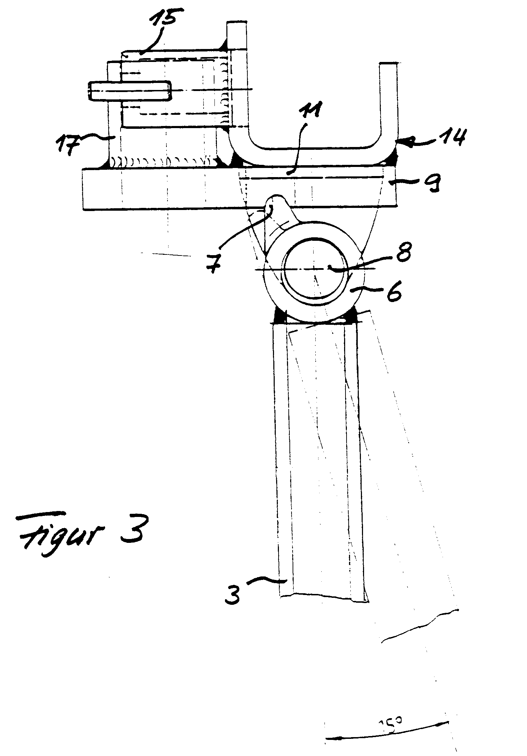

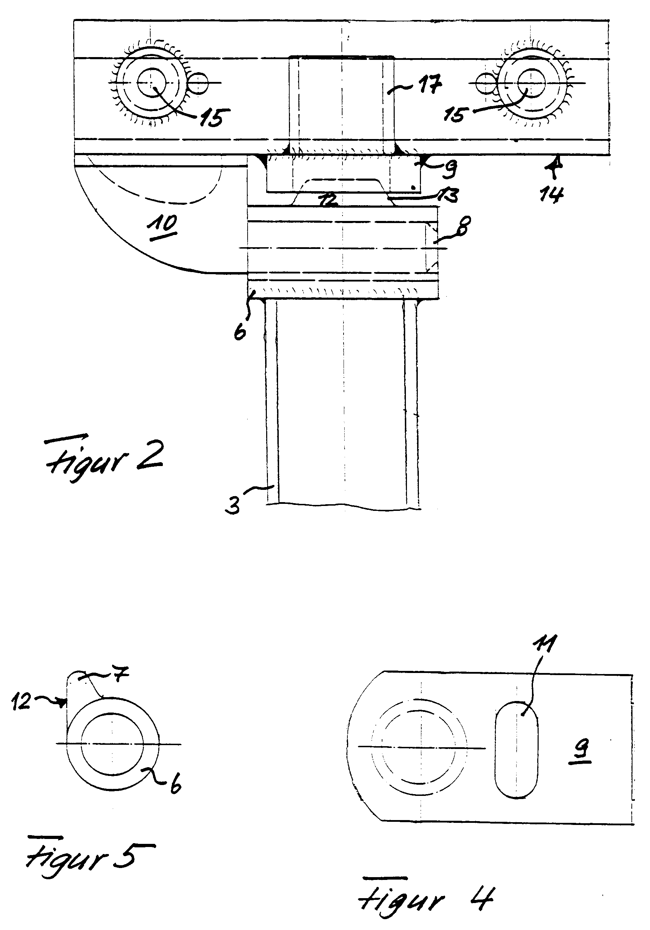

Das in der Figur 1 schematisch dargestellte Verdeckgestell eines Lastkraftwagens besteht im wesentlichen aus horizontal ausgerichteten oberen Längs-1 und Quergurten 2 sowie diese tragenden vertikal ausgerichteten Tragpfosten 3, welche unterendig gegen die Längsholme 4 der Ladeplattform 5 abgestützt sind. Zur Verbindung der Tragpfosten 3 mit den Längsgurten 1 des Verdeckgestelles ist an deren oberem Ende und an den Längsgurten 1 jeweils eine Steck- Schwenkriegeleinrichtung vorgesehen. Die Steck- Schwenkriegeleinrichtung besteht dabei jeweils aus einem an das obere Ende des Tragpfostens 3 angeschlossenen Auge 6 und einer ebenfalls am oberen Ende des Tragpfostens 3 angeordneten Riegelnase 7 sowie einem an den Längsgurt 1 angeschlossenen Zapfen 8 und einer an den Längsgurt angeschlossenen Riegelplatte 9. Der mit dem pfostenseitlg angeordneten Auge 6 zusammenwirkende Zapfen 8 ist parallel zur Längserstreckung des Längsgurtes 1 ausgerichtet und vermittels eines Klobens 10 in einem Abstand zum Längsgurt 1 gehalten. Das am oberen Ende des Tragpfostens 3 angeordnete Auge 6 weist einen gegenüber dem Durchmesser des Zapfens 8 geringfügig größeren lichten Durchmesser auf, um das Einfädeln des Zapfens 8 zu erleichtern. Die Riegelnase 7 ist mit dem Auge 6 einteilig ausgebildet und tangential zu dessen Außenumfang angeordnet. Der Riegelnase 7 ist eine Rastausnehmung 11 in der Riegelplatte 9 zugeordnet, wobei die Rastausnehmung 11 durch eine Langlochausnehmung mit geradlinigen vertikalen Innenumfangswandungen gebildet ist, während die Rastnase 7 mit zu ihren freien Ende hin zueinander konvergierenden Längs- 12 und Stirnseiten 13 versehen ist. Wie insbesondere aus der Figur 3 ersichtlich sind die Riegelnase 7 und die Rastausnehmung 11 in der Riegelplatte 9 jeweils asymetrisch einerseits zur Längsachse des Tragpfostens 3 und andererseits des Längsgurtes 1 des Verdeckgestelles sowie bezüglich des Zapfens 8 bzw. der Achse des Auges 6 angeordnet.
Bei der im Ausfüphrungsbeispiel gezeigten Ausführungsform ist weiterhin vorgesehen, daß die Steck-Schwenkriegeleinrichtung insgesamt in dessen Längsrichtung versetzbar mit dem Längsgurt 1 des Verdeckgestelles verbindbar ist. Zu diesem Zweck sind die Riegelplatte 9 und der Zapfen 8 an ein Tragteil 14 angeschlossen, wobei das Tragteil 14 einen im wesentlichen U-förmigen Profilquerschnitt aufweist und in seiner montierten Stellung die untere Hälfte des Längsgurtes 1 des Verdeckgestelles umgreift. Zur Festlegung am Längsgurt 1 des Verdeckgestelles ist das ein Kupplungsteil bildende Tragteil 14 mit als Federschnäpper ausgebildeten Riegeleinrichtungen 15 versehen, welche jeweils im Abstand und symetrisch zur Riegelplatte 9 angeordnet sind. Wie weiterhin insbesondere aus den Figuren 3 und 4 ersichtlich ist die Riegelplatte 9 bezüglich der Längserstreckung des Länggurtes 1 des Verdeckgestelles über dessen Breite hinaus verlängert und mit einer durch eine Rohrhülse gebildeten Einsteckaufnahme 17 für eine abnehmbare Aussteifungsstrebe des Verdeckgestelles ausgestattet.
Im gezeigten Ausführungsbeispiel sind das Auge 6, der Zapfen 8samt Kloben 10, die Riegelplatte 9 sowie die Federschnäpper 15 und die Einsteckaufnahme 17 jeweils als Einzelteile augebildet und zum einen mit dem Tragpfosten 3 sowie zum anderen mit dem Tragteil 14 durch Schweißung verbunden. Es ist jedoch selbstverständlich, daß anstelle einer solchen gebauten Ausführung auch eine Ausführung als Formteil verwendet werden kann.

## Patentansprüche

1. Tragpfostenkupplung für aus über aufragende Tragpfosten (3) gegen die Ladeplattform (5) abgestützten Längs(1)-und Quergurten (2) gebildete Verdeckgestelle von Lastkraftwagen und Anhängern, bei welchen die Tragpfosten jeweils aus einem oberendig und unterendig mit je einer Einrichtung einerseits zur Verbindung mit den oberen Längsgurten des Verdeckgestelles und andererseits mit den Längsholmen einer Ladeplattform versehenen Profilabschnitt bestehen, dadurch gekennzeichnet, daß die Kupplung zur Verbindung des Tragpfostens (3) mit dem oberen Längs-(1) bzw. Quergurt (2) des Verdeckgestelles durch eine Steck- Schwenkriegeleinrichtung gebildet ist, wobei die Steck-Schwenkriegeleinrichtung zur oberendigen Verbindung des Tragpfostens (3) mit dem Längsgurt (1) des Verdeckgestelles aus einem pfostenseitig angeordneten Auge (6) und einem verdeckseitig angeordneten Zapfen (8) sowie einer eine Rastausnehmung (11) aufweisenden Riegelplatte (9) und eine Riegelnase (7) umfassenden Verriegelungseinrichtung besteht.

2. Tragpfostenkupplung nach Anspruch 1, dadurch gekennzeichnet, daß die aus Zapfen (8) und Auge (6) bestehende Steckverbindung parallel zur Längserstreckung des Längsgurtes (1) des Verdeckgestelles ausgerichtet angeordnet ist.

3. Tragpfostenkupplung nach Anspruch 1 und 2, dadurch gekennzeichnet, daß die Schwenkriegeleinrichtung aus einer tangential zum Außenumfang des am Tragpfosten (3) angeordneten Auges (6) ausgerichten Riegelnase (7) und einer als Langlochausnehmung ausgebildeten Rastausnehmung (11) in einer an den oberen Langsgurt (1) des Verdeckgestelles anschließbaren Riegelplatte (9) besteht.

4. Tragpfostenkupplung nach Anspruch 1 bis 3, dadurch gekennzeichnet, daß der Zapfen (8) der Steckverbindung gegenüber dem lichten Durchmeser des am Tragpfosten (3) angeordneten Auges (6) einen geringeren Querschnitt aufweist.

5. Tragpfostenkupplung nach Anspruch 1 bis 4, dadurch gekennzeichnet, daß die Riegelnase (7) mit zu ihrer Spitze hin konvergierenden Längs- (12) und Seitenflanken (13) ausgestattet ist.

6. Tragpfostenkupplung nach Anspruch 1 bis 5, dadurch gekennzeichnet, daß die die Rastausnehmung bildende Langlochausnehmung (11) in der Riegelplatte (9) mit geradlinig senkrecht verlaufenden Umfangswandungen ausgestattet und bezüglich der Längsachse des Tragpfostens (3) asymetrisch angeordnet ist.

7. Tragpfostenkupplung nach Anspruch 1 bis 6, dadurch gekennzeichnet, daß die Längserstreckung der Langlochausnehmung (11) der mittleren Länge der Riegelnase (7) entspricht.

8. Tragpfostenkupplung nach Anspruch 1 bis 7, dadurch gekennzeichnet, daß die Riegelplatte (9) und der Zapfenträger (10) an einem Kupplungsteil zum Anschluß an den oberen Längsgurt (1) des Verdeckgestelles angeordnet sind.

9. Tragpfostenkupplung nach Anspruch 1 bis 8, dadurch gekennzeichnet, daß das Kupplungsteil aus einen im wesentlichen U-förmigen, den Längsgurt (1) des Verdeckgestelles teilweise umfassenden Tragteil (14) und wenigstens einer Verriegelungseinrichtung (15) zur Festlegung an dem Längsgurt (1) des Verdeckgestelles besteht.

10. Tragpfostenkupplung nach Anspruch 1 bis 9, dadurch gekennzeichnet, daß das Kupplungsteil zwei zur Riegelplatte (9) symetrisch angeordnete Verriegelungseinrichtungen (15) zur Verbindung mit dem Längsgurt (1) des Verdeckgestelles aufweist und daß die beiden Verriegelungseinrichtungen (15) jeweils durch einen Federschnäpper gebildet sind.

11. Tragpfostenkupplung nach Anspruch 1 bis 10, dadurch gekennzeichnet, daß die Riegelplatte (9) durch einen Flachmaterialzuschnitt gebildet und mittels Schweißung mit dem Tragteil (14) des Kupplungsteiles verbunden ist und daß ferner an das Tragteil (14) zugleich eine Aufnahme (17) für eine Aussteifungsstrebe des Verdeckgestelles angeschlossen ist.

## Claims

1. Support post coupling device for roof frames of trucks and trailers in the form of lengthwise (1) and crosswise struts (2) supported on the loading platform (5) on upright support posts (3), in which the support posts each comprise a profiled section provided at the top and the bottom with a mechanism to connect on the one hand with the upper lengthwise struts of the roof frame and on the other hand with the lengthwise shafts of the loading platform, characterised in that the coupling for connecting the support post (3) with the upper lengthwise (1) or crosswise strut (2) of the roof frame is formed by a plug-in- pivot locking mechanism, whereby the plug-in pivot locking mechanism for connecting the support post (3) with the lengthwise strut (1) of the roof frame at the top comprises an eye (6) on the side of the post and a pin (8) on the side of the roof and a locking plate (9) having a detent recess (11) and a locking mechanism comprising a locking nose (7).

2. Support post coupling device according to claim 1, characterised in that the plug-in connection comprising the pin (8) and eye (6) is arranged parallel to the lengthwise extension of the lengthwise strut (1) of the roof frame.

3. Support post coupling device according to claims 1 and 2, characterised in that the pivot locking mechanism comprises a locking nose (7) aligned tangentially in relation to the outer periphery of the eye (6) on the support post (3) and a detent recess (11) in the form of a longitudinal hole in a locking plate (9) connectable to the upper lengthwise strut (1) of the roof frame.

4. Support post coupling device according to claims 1 to 3, characterised in that the pin (8) of the plug-in connection has a smaller cross section than the inside diameter of the eye (6) on the support post (3).

5. Support post coupling device according to claims 1 to 4, characterised in that the locking nose (7) is furnished with lengthwise (12) and side flanges (13) converging to a point.

6. Support post coupling device according to claims 1 to 5, characterised in that the longitudinal hole (11) in the locking plate (9) forming the detent recess is furnished with straight rectangular peripheral walls and is arranged asymmetrically in relation to the longitudinal axis of the support post (3).

7. Support post coupling device according to claims 1 to 6, characterised in that the lengthwise extension of the longitudinal hole (11) corresponds to the middle length of the locking nose (7).

8. Support post coupling device according to claims 1 to 7, characterised in that the locking plate (9) and the pin bearer (10) are arranged on a coupling part for connection with the upper lengthwise strut (1) of the roof frame.

9. Support post coupling device according to claims 1 to 8, characterised in that the coupling part comprises an essentially U-shaped support element (14) partly surrounding the roof frame and at least one locking mechanism (15) for securing to the lengthwise strut (1) of the roof frame.

10. Support post coupling device according to claims 1 to 9, characterised in that the coupling element comprises two locking devices (15) arranged symmetrically in relation to the locking plate (9) for connecting with the lengthwise strut (1) of the roof frame and in that the two locking mechanisms (15) are each in the form of a spring-loaded catch.

11. Support post coupling device according to claims 1 to 10, characterised in that the locking plate (9) is formed by a blank of flat material and is connected to the support element (14) of the coupling part by welding and in that a mount (17) for a reinforcing strut of the roof frame is connected to the support element (14).

## Revendications

1. Dispositif d'assemblage de montant porteur pour des superstructures de camions et remorques formées de barres longitudinales (1) et transversales (2) prenant appui sur la plate-forme (5) de chargement par l'intermédiaire de montants porteurs (3) verticaux, superstructures dans le cas desquelles les montants porteurs se composent chacun d'une longueur de profilé pourvue à son extrémité supérieure et à son extrémité inférieure chaque fois d'un dispositif destiné d'une part à la liaison aux barres supérieures longitudinales de la superstructure et d'autre part à la liaison aux longerons d'une plate-forme de chargement, caractérisé en ce que le dispositif d'assemblage, destiné à relier le montant porteur (3) à la barre supérieure longitudinale (1) ou à la barre supérieure transversale (2) de la superstructure, est formé par un dispositif de verrouillage pivotant enfichable, ledit dispositif de verrouillage pivotant enfichable, destiné à relier l'extrémité supérieure du montant porteur (3) à la barre longitudinale (1) de la superstructure, se composant d'un oeil (6) disposé du côté du montant et d'un pivot (8) disposé du côté de la superstructure, ainsi que d'une plaque de verrouillage (9) présentant un évidement d'arrêt (11) et d'un dispositif de verrouillage comportant un talon de verrouillage (7).

2. Dispositif d'assemblage pour montant porteur suivant la revendication 1, caractérisé en ce que la liaison enfichable constituée du pivot (8) et de l'oeil (6) est orientée parallèlement à l'extension longitudinale de la barre longitudinale (1) de la superstructure.

3. Dispositif d'assemblage pour montant porteur suivant l'une ou l'autre des revendications 1 et 2, caractérisé en ce que le dispositif de verrouillage pivotant se compose d'un talon de verrouillage (7) orienté tangentiellement à la périphérie extérieure de l'oeil (6) prévu sur le montant porteur (3) et d'un évidement d'arrêt (11) ayant la forme d'une boutonnière ménagée dans une plaque de verrouillage (9) pouvant être reliée à la barre supérieure longitudinale (1) de la superstructure.

4. Dispositif d'assemblage pour montant porteur suivant l'une quelconque des revendications 1 à 3, caractérisé en ce que le pivot (8) de la liaison enfichable présente une section transversale plus petite que le diamètre intérieur de l'oeil (6) prévu sur le montant porteur (3).

5. Dispositif d'assemblage pour montant porteur suivant l'une quelconque des revendications 1 à 4, caractérisé en ce que le talon de verrouillage (7) est pourvu de flancs longitudinaux (12) et latéraux (13) convergeant vers son sommet.

6. Dispositif d'assemblage pour montant porteur suivant l'une quelconque des revendications 1 à 5, caractérisé en ce que l'évidement en forme de boutonnière (11) formant l'évidement d'arrêt ménagé dans la plaque de verrouillage (9) est pourvu de parois périphériques rectilignes et verticales et est disposé de manière asymétrique par rapport à l'axe longitudinal du montant porteur (3).

7. Dispositif d'assemblage pour montant porteur suivant l'une quelconque des revendications 1 à 6, caractérisé en ce que l'extension longitudinale de l'évidement en forme de boutonnière (11) correspond à la longueur moyenne du talon de verrouillage (7).

8. Dispositif d'assemblage pour montant porteur suivant l'une quelconque des revendications 1 à 7, caractérisé en ce que la plaque de verrouillage (9) et le porte-pivot (10) sont disposés sur un élément d'assemblage à relier à la barre supérieure longitudinale (1) de la superstructure.

9. Dispositif d'assemblage pour montant porteur suivant l'une quelconque des revendications 1 à 8, caractérisé en ce que l'élément d'assemblage se compose d'un élément de support (14) essentiellement en forme de U enveloppant partiellement la barre longitudinale (1) de la superstructure et d'au moins un dispositif de verrouillage (15) assurant la fixation à la barre longitudinale (1) de la superstructure.

10. Dispositif d'assemblage pour montant porteur suivant l'une quelconque des revendications 1 à 9, caractérisé en ce que l'élément d'assemblage présente, pour la liaison à la barre longitudinale (1) de la superstructure, deux dispositifs de verrouillage (15) disposés symétriquement par rapport à la plaque de verrouillage (9) et en ce que les deux dispositifs de verrouillage (15) sont formés chacun d'un déclic à ressort.

11. Dispositif d'assemblage pour montant porteur suivant l'une quelconque des revendications 1 à 10, caractérisé en ce que la plaque de verrouillage (9) est formée par un flan de matériau plat et est reliée par soudage à l'élément de support (14) de l'élément d'assemblage et en ce qu'en outre un logement (17) destiné à recevoir une entretoise de renforcement de la superstructure est également relié à l'élément de support (14).
